# EUROPEAN PATENT APPLICATION

(11) **EP 2 719 882 A1**
(43) Date of publication of application: **16.04.2014**
(21) Application number: 11867284.9
(22) Date of filing: 09.06.2011
(51) Int. Cl.: F02D 29/02, F02D 17/00

(54) **ENGINE CONTROL DEVICE**

(71) Applicant: Toyota Jidosha Kabushiki Kaisha, Toyota-shi, Aichi 471-8571 (JP)
(72) Inventor: YAMAMOTO Kazuhiro, Aichi-ken, 471-8571 (JP); MORISE Masaru, Aichi-ken, 471-8571 (JP); WATANABE Hideo, Aichi-ken, 471-8571 (JP); OKUBO Tadanao, Aichi-ken, 471-8571 (JP)
(74) Representative: Kuhnen & Wacker
(86) International application number: PCT/JP2011/063219
(87) International publication number: WO 2012/169035

(57) **Abstract**

Disclosed is an engine control device (or electronic control unit; ECU 8) including: a condition evaluation section 85 which, if an engine 1 is stopped while the vehicle is moving, evaluates whether or not a predetermined restart condition is satisfied for the engine 1 to be restarted in order to prevent insufficient lubrication in a manual transmission 2; and a control implementation section 86 which, if the condition evaluation section 85 determines that the restart condition is satisfied, implements a restart operation on the engine 1. Since the restart operation is implemented on the engine 1 if it is determined that the restart condition is satisfied as above, insufficient lubrication of synchromesh mechanisms 24A, 24B, and 24C in the manual transmission 2 is prevented by specifying a proper condition as the restart condition.

## Description

### Technical Field

The present invention relates to an engine control device in a vehicle including an engine, a manual transmission, and a clutch disposed between the engine and the manual transmission and capable of switching between disengaged mode and engaged mode, the engine control device stopping the engine in response to a manual instruction to stop the engine while the vehicle is moving.

### Background Art

Conventional technology has been proposed which improves the fuel economy of a vehicle with a manual transmission (MT) by stopping the engine when the clutch is being disengaged and the shift lever is in the neutral (N) position and starting the engine when the shift lever is moved from the neutral (N) position to one of drive positions.

For example, Patent Document 1 discloses an engine stop control device that stops the engine if the clutch is being disengaged, the shift lever is in a non-drive position, and the throttle position indicates that the throttle is practically completely closed, and that prohibits the engine from being stopped if the clutch is being disengaged, the shift lever is in a non-drive position, but the throttle position does not indicate that the throttle is practically completely closed. The engine stop control device allows the engine rotational speed to be increased according to the throttle position, thereby enabling smooth downshifting.

### Citation List

### Patent Literature

Patent Document 1
Japanese Patent Application Publication, Tokukaihei, No. 11-257119

### Summary of the Invention

### Problems to Be Solved by the Invention

The engine stop control device of Patent Document 1, however, may not be able to provide sufficient lubrication for a synchromesh and other mechanisms in the manual transmission because the engine stop control device allows the vehicle to travel while the shift lever is in the neutral (N) position and the engine is stationary.

Specifically, the synchromesh and other mechanisms in the manual transmission are lubricated with lubrication oil stored in a lower portion of the casing of the manual transmission and scooped up as a result of rotation of the output shaft. When the vehicle is moving with the shift lever being in the neutral (N) position and the engine being stationary, the output shaft is rotating, but the input shaft is not rotating in the manual transmission.

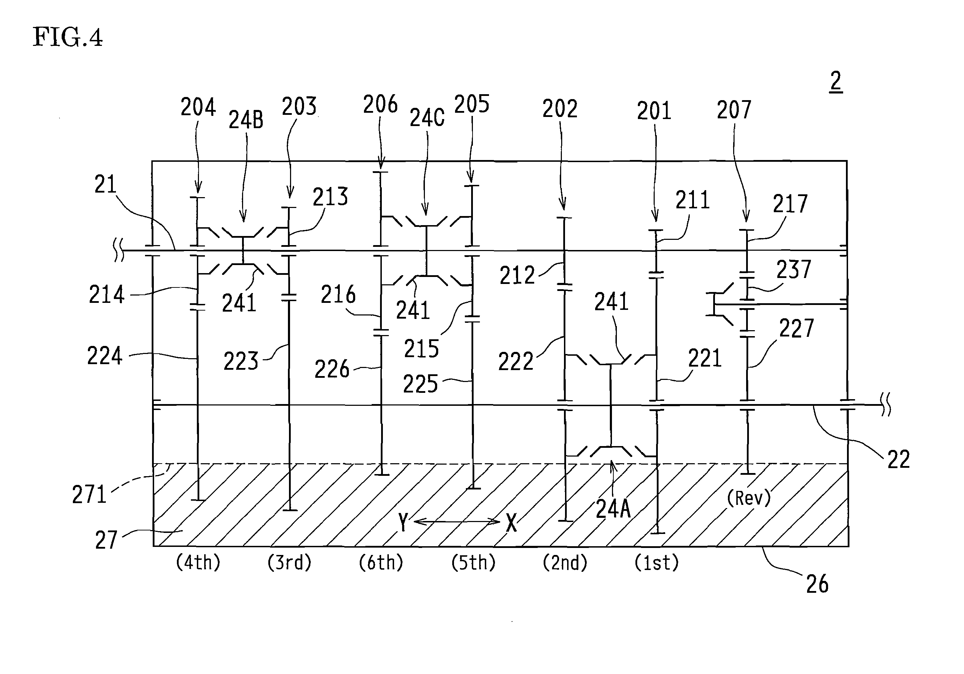

Under this situation, since the input shaft does not rotate, the idling gears (e.g., driven gears 221 and 222 shown in Figure 4) on the output shaft do not rotate, and the lubrication oil is not scooped up by the idling gears. Therefore, while the vehicle is moving with the shift lever being in the neutral (N) position and the engine being stationary, the lubrication of the synchromesh and other mechanisms in the manual transmission will deteriorate. If this condition continues, lubrication could become insufficient.

The present invention, conceived in view of the problem, has an object to provide an engine control device capable of preventing insufficient lubrication of the synchromesh and other mechanisms in the manual transmission.

### Solution to Problem

To address the problems, the engine control device in accordance with the present invention is arranged as follows.

The engine control device in accordance with the present invention is provided in a vehicle including an engine, a manual transmission, and a clutch disposed between the engine and the manual transmission and capable of switching between disengaged mode and engaged mode, the engine control device stopping the engine in response to a manual instruction to stop the engine while the vehicle is moving, the engine control device comprising: condition evaluation means which, if the engine is stopped while the vehicle is moving, evaluates whether or not a predetermined restart condition is satisfied for the engine to be restarted in order to prevent insufficient lubrication in the manual transmission; and control implementation means which, if the condition evaluation means determines that the restart condition is satisfied, implements a restart operation on the engine.

If the engine is stopped while the vehicle is moving, the engine control device arranged as above evaluates whether or not a predetermined restart condition is satisfied for the engine to be restarted in order to prevent insufficient lubrication in the manual transmission. Furthermore, if it is determined that the restart condition is satisfied, the engine control device implements a restart operation on the engine. Therefore, insufficient lubrication of the synchromesh and other mechanisms in the manual transmission is preventable by properly specifying the restart condition.

In other words, the engine is restarted if it is determined that the restart condition is satisfied. Therefore, if the clutch is in engaged mode, the input shaft of the manual transmission is driven to rotate. Since the rotation of the input shaft drives idling gears (e.g., the driven gears 221 and 222 shown in Figure 4) on the output shaft to rotate, the idling gears scoop up the lubrication oil. That prevents insufficient lubrication.

The engine control device in accordance with the present invention is preferably arranged so that the restart condition is that a time longer than or equal to a predetermined restart time has elapsed since the engine is stopped.

Since the restart condition is that a time longer than or equal to a predetermined restart time has elapsed since the engine is stopped, the engine control device arranged as above is capable, by setting the restart time to a proper value, of an easy and proper evaluation as to whether or not the restart condition is satisfied.

The engine control device in accordance with the present invention is preferably arranged so as to further comprise time setting means which sets the restart time based on vehicle speed.

The engine control device arranged as above is capable of setting the restart time to a proper value because the restart time is specified based on vehicle speed.

In other words, with an increase in vehicle speed, the rotational speed of the output shaft increases, and so does the difference in rotational speed between the output shaft and the input shaft. Therefore, at greater vehicle speeds, lubrication will increasingly likely become insufficient in the manual transmission. Hence, the engine control device is capable of setting the restart time to a proper value by specifying the restart time based on vehicle speed.

The engine control device in accordance with the present invention is preferably arranged so that the time setting means sets the restart time to a shorter time in response to an increase in the vehicle speed.

The engine control device arranged as above is capable of setting the restart time to a more proper value because the restart time is set to a shorter time in response to an increase in the vehicle speed.

In other words, with an increase in vehicle speed, the rotational speed of the output shaft increases, and so does the difference in rotational speed between the output shaft and the input shaft. Therefore, at greater vehicle speeds, lubrication will increasingly likely become insufficient in the manual transmission. Hence, the engine control device is capable of setting the restart time to a more proper value by setting the restart time to a shorter time in response to an increase in the vehicle speed.

The engine control device in accordance with the present invention is preferably arranged so as to further comprise: vehicle speed detection means which detects a vehicle speed at predetermined sampling intervals; and integrated value computation means which multiplies the vehicle speed detected by the vehicle speed detection means by the sampling interval to obtain a product thereof and integrates each product thus obtained starting from when the engine is stopped, so as to obtain an integrated value, wherein the restart condition is that the integrated value obtained by the integrated value computation means is greater than or equal to a predetermined threshold.

In this manner, vehicle speed is detected at predetermined sampling intervals and multiplied by a sampling interval to obtain a product thereof. The obtained product is integrated starting from when the engine is stopped to obtain an integrated value. If the obtained integrated value is greater than or equal to a predetermined threshold, it is determined that the restart condition is satisfied. Therefore, the engine control device arranged as above is capable of a more proper evaluation as to whether or not the restart condition is satisfied.

In other words, when gears are in neutral (N), the rotational speed of the output shaft increases with an increase in the vehicle speed, and so does the difference in rotational speed between the output shaft and the input shaft. Therefore, at greater vehicle speeds, lubrication will increasingly likely become insufficient in the manual transmission. Lubrication will also increasingly likely become insufficient in the manual transmission as time elapses since when the engine is stopped. As discussed above, it is determined that the restart condition is satisfied if the integrated value obtained by integrating the product of vehicle speed and a sampling interval for the vehicle speed starting from when the engine is stopped is greater than or equal to a predetermined threshold. Hence, the engine control device is capable of a more proper evaluation as to whether or not the restart condition is satisfied.

The engine control device in accordance with the present invention is preferably arranged so as to further comprise alert means which, if the control implementation means has implemented the restart operation on the engine, outputs an alert that the engine has been restarted.

The engine control device arranged as above is capable of improving convenience because the engine control device outputs an alert that the engine has been restarted if a restart operation is implemented on the engine.

In other words, if a restart operation is implemented on the engine, an alert is output that the engine has been restarted. Therefore, for example, the driver can, while driving, recognize that the engine has been restarted. Hence, the engine control device is capable of improving convenience.

The engine control device in accordance with the present invention is preferably arranged so that the alert means produces such a display that a driver can visually recognize that the engine has been restarted.

The engine control device arranged as above is capable of further improving convenience because the engine control device produces such a display that a driver can visually recognize that the engine has been restarted.

The engine control device in accordance with the present invention is preferably arranged so that if the engine is stopped in response to a manual instruction to stop the engine while the vehicle is moving, the alert means outputs an alert that the engine has been stopped.

The engine control device arranged as above is capable of improving convenience because the engine control device outputs an alert that the engine has been stopped if the engine is stopped while the vehicle is moving.

In other words, an alert is output that the engine has been stopped. Therefore, for example, the driver can, while driving, recognize that the engine has been stopped. Hence, the engine control device is capable of further improving convenience.

### Advantageous Effects of the Invention

If the engine is stopped while the vehicle is moving, the engine control device in accordance with the present invention evaluates whether or not a predetermined restart condition is satisfied for the engine to be restarted in order to prevent insufficient lubrication in the manual transmission. Furthermore, if it is determined that the restart condition is satisfied, the engine control device implements a restart operation on the engine. Therefore, insufficient lubrication of the synchromesh and other mechanisms in the manual transmission is preventable by properly specifying the restart condition.

### Brief Description of Drawings

Figure 1 is a structural diagram illustrating, as an example, a power train and its control system for a vehicle in which an engine control device in accordance with the present invention is installed.
Figure 2 is a structural diagram illustrating, as an example, an engine installed in the vehicle shown in Figure 1.
Figure 3 is a structural diagram illustrating, as an example, a clutch installed in the vehicle shown in Figure 1.
Figure 4 is a skeleton diagram illustrating, as an example, a manual transmission installed in the vehicle shown in Figure 1.
Figure 5 is a cross-sectional view of an exemplary upper half portion of the synchromesh mechanism shown in Figure 4.
Figure 6 is a plan view of an exemplary shift pattern (shift gate layout) for a shift gate guiding the movement of the shift lever of the shift device shown in Figure 1.
Figure 7 is a function/architecture diagram illustrating, as an example, an engine control device installed in the vehicle shown in Figure 1.
Figure 8 is a graph representing, as an example, stored content in the time memory section shown in Figure 7.
Figure 9 is a front view of an example of the display section shown in Figure 7.
Figure 10 is a flow chart depicting, as an example, an operation of the engine control device shown in Figure 7.
Figure 11 is a flow chart depicting in detail an exemplary manipulation evaluation process implemented in step S103 in the flow chart in Figure 10.
Figure 12 is a flow chart depicting in detail an exemplary restart evaluation process implemented in step S109 in the flow chart in Figure 10.
Figure 13 is a graph representing another exemplary restart evaluation process implemented in step S109 in the flow chart in Figure 10.
Figure 14 is a flow chart depicting in detail another exemplary restart evaluation process implemented in step S109 in the flow chart in Figure 10.

### Description of Embodiments

The following description will discuss embodiments of the present invention in reference to drawings.

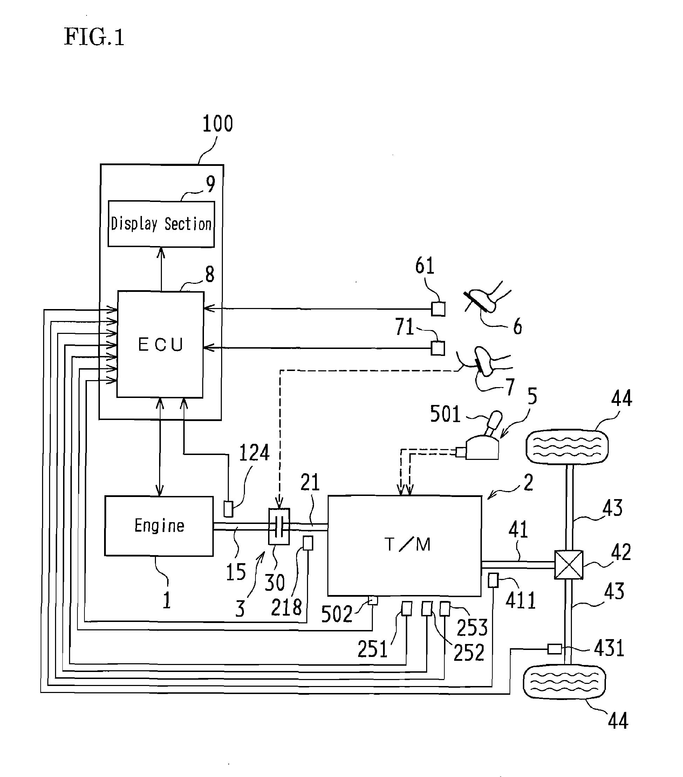

Figure 1 is a structural diagram illustrating, as an example, a power train and its control system for a vehicle in which an engine control device 100 in accordance with the present invention is installed. The vehicle in accordance with the present embodiment is an FR (front-engine. rear-wheel-drive) vehicle and includes an engine 1, a manual transmission (MT) 2, a clutch 3, a hydraulic pressure circuit 4, a shift device 5, an accelerator pedal 6, a clutch pedal 7, an electronic control unit (ECU) 8, and a display section 9. The engine control device 100 in accordance with the present invention is an equivalent of a combination of the ECU 8 and the display section 9.

As illustrated in Figure 1, a crankshaft 15, or an output shaft for the engine 1, is coupled to the clutch 3. When the clutch 3 is in engaged mode, the driving force (drive torque) from the engine 1 is transmitted to drive wheels 44 via the crankshaft 15, the clutch 3, an input shaft 21, the manual transmission 2, an output shaft 22 (see Figure 4), a drive shaft 41, a differential gear mechanism 42, and an axle 43.

Near the crankshaft 15 is disposed an engine rotational speed sensor 124 detecting the rotational speed of the crankshaft 15 as the engine rotational speed Ne. Near the input shaft 21 of the manual transmission 2 is disposed an input shaft rotational speed sensor 218 detecting the rotational speed of the input shaft 21 as the input shaft rotational speed Ni. Near the output shaft 22 (or drive shaft 41) of the manual transmission 2 is disposed an output shaft rotational speed sensor 411 detecting the rotational speed of the output shaft 22 (or drive shaft 41) as the output shaft rotational speed No. Moreover, near the axle 43 is disposed an axle rotational speed sensor 431 detecting the rotational speed of the axle 43 as the axle rotational speed Nv. The engine rotational speed Ne detected by the engine rotational speed sensor 124, the input shaft rotational speed Ni detected by the input shaft rotational speed sensor 218, the output shaft rotational speed No detected by the output shaft rotational speed sensor 411, and the axle rotational speed Nv detected by the axle rotational speed sensor 431 are fed to the ECU 8.

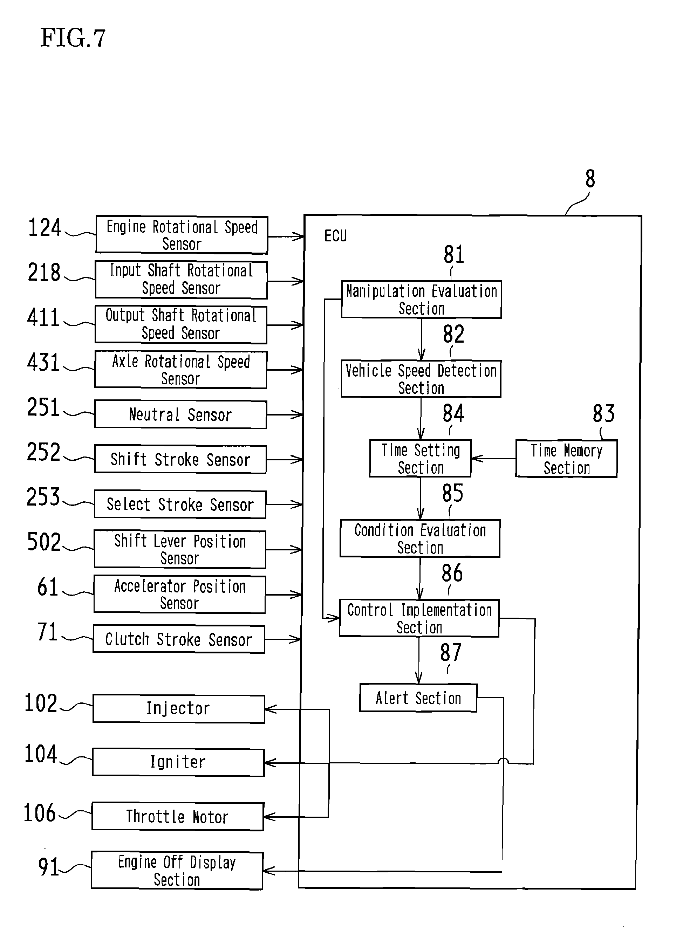

The shift device 5 is provided with a shift lever 501 which is taken by the driver in his/her hand to manually change the shift lever position. The accelerator pedal 6 has an accelerator position sensor 61 detecting an accelerator position. The clutch pedal 7 has a clutch stroke sensor 71 detecting a clutch stroke. The accelerator position detected by the accelerator position sensor 61 and the clutch stroke detected by the clutch stroke sensor 71 are fed to the ECU 8 (see Figure 7).

The manual transmission 2 has a shift lever position sensor 502 detecting a shift lever position, a neutral sensor 251 detecting the shift lever being in the neutral (N) position, a shift stroke sensor 252 detecting a shift stroke, and a select stroke sensor 253 detecting a select stroke. Detection results from the shift lever position sensor 502, the neutral sensor 251, the shift stroke sensor 252, and the select stroke sensor 253 are fed to the ECU 8 (see Figure 7).

### -- Engine 1 --

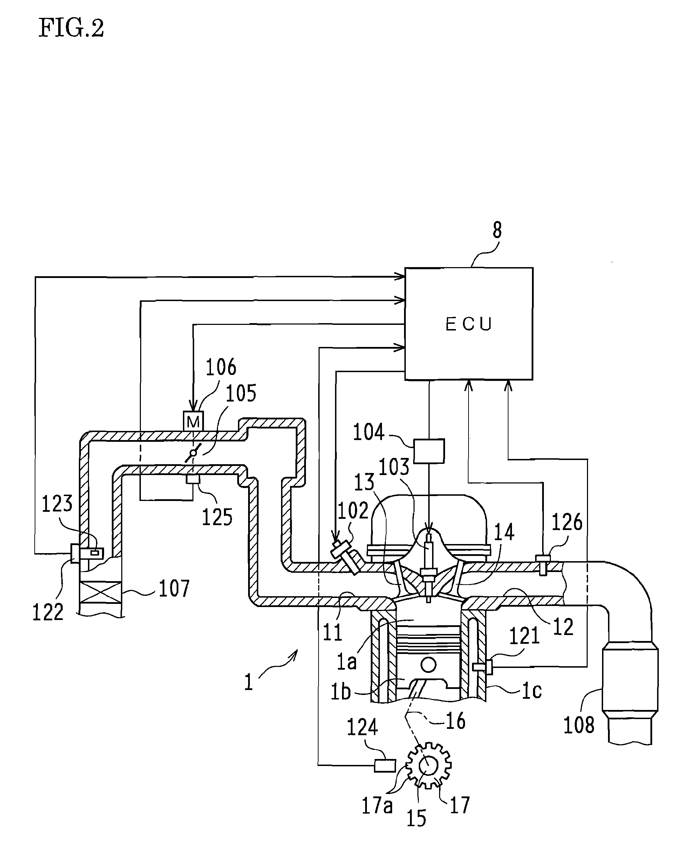

First, referring to Figure 2, the engine 1 in accordance with the present embodiment will be described. Figure 2 is a structural diagram illustrating the exemplary engine 1 installed in the vehicle shown in Figure 1. The engine 1 is, for example, a multicylinder gasoline engine and includes a piston 1b constituting a combustion chamber 1a and a crankshaft 15 (see Figure 1) which is the output shaft. The piston 1b is coupled to the crankshaft 15 via a connecting rod 16. The reciprocal motion of the piston 1b is converted by the connecting rod 16 to the rotational motion of the crankshaft 15.

The crankshaft 15 is provided with a signal rotor 17 which has a plurality of projections 17a formed at equal intervals on the outer circumferential face thereof. The engine rotational speed sensor 124 is positioned facing a side of the signal rotor 17. The engine rotational speed sensor 124 is, for example, an electromagnetic pickup, generating a pulse signal (output pulses) every time a projection 17a on the rotating crankshaft 15 passes in front of the engine rotational speed sensor 124.

The combustion chamber 1a in the engine 1 has a spark plug 103. An igniter 104 adjusts ignition timings for the spark plug 103. The igniter 104 is controlled by the ECU 8. A water temperature sensor 121 detecting engine water temperature (cooling water temperature) is provided in a cylinder block 1c of the engine 1.

The combustion chamber 1a in the engine 1 is connected to an intake path 11 and an exhaust path 12. An intake valve 13 is provided between the intake path 11 and the combustion chamber 1a. Opening/closing the intake valve 13 enables/disables communication between the intake path 11 and the combustion chamber 1a. An exhaust valve 14 is provided between the exhaust path 12 and the combustion chamber 1a. Opening/closing the exhaust valve 14 enables/disables communication between the exhaust path 12 and the combustion chamber 1a.

The intake path 11 of the engine 1 is provided with, for example, an air cleaner 107, an air flow meter 122, an intake air temperature sensor 123, and a throttle valve 105. The throttle valve 105 adjusts air intake to the engine 1. The exhaust path 12 of the engine 1 is provided with, for example, an O₂ sensor 126 and a three-way catalyst 108. The O₂ sensor 126 detects oxygen concentration in exhaust gas.

The throttle valve 105 in the intake path 11 of the engine 1 is driven by a throttle motor 106. The opening degree (throttle position) of the throttle valve 105 is detected by a throttle position sensor 125. The throttle motor 106 is driven under control of the ECU 8.

The intake path 11 is provided with an injector (fuel injection valve) 102 which receives fuel (gasoline in this embodiment) from a fuel tank via a fuel pump and injects the fuel into the intake path 11. The injected fuel is mixed with intake air, and the resultant air/fuel mixture is introduced to the combustion chamber 1a in the engine 1. The air/fuel mixture (fuel and air) introduced to the combustion chamber 1a is ignited by the spark plug 103 to combust and explode. The combustion and explosion of the air/fuel mixture in the combustion chamber 1a causes the piston 1b to move reciprocally up and down in Figure 2 and drives the crankshaft 15 to rotate.

### -- Clutch 3 --

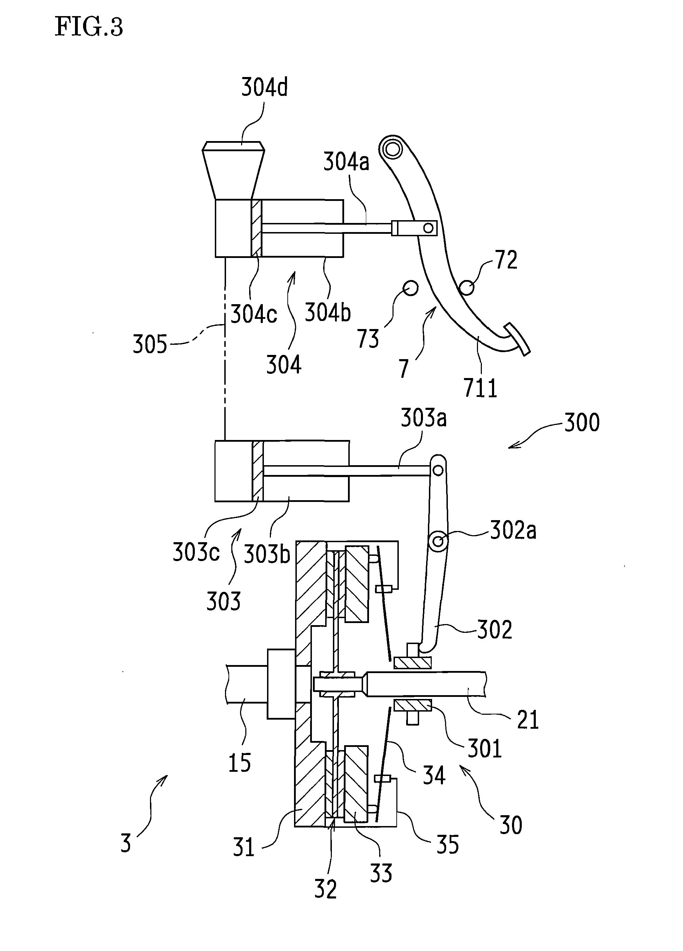

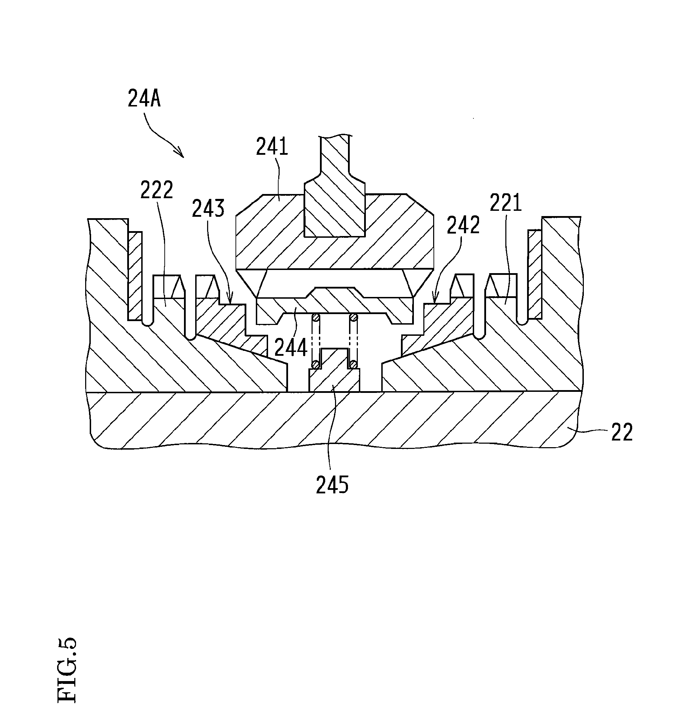

Next, referring to Figure 3, the structure of the clutch 3 will be described. Figure 3 is a cross-sectional view of an exemplary structure of the clutch 3 installed in the vehicle shown in Figure 1. The clutch 3 includes a friction clutch 30 (or simply a "clutch 30") and a clutch actuator mechanism 300 which actuates the clutch 30 in response to a depression of the clutch pedal 7 as illustrated in Figure 5.

The clutch 30 is a dry, single-disc friction clutch and disposed intervening between the crankshaft 15 and the input shaft 21 of the manual transmission 2. Alternatively, the clutch 30 may be of any type other than the dry, single-disc clutch.

The clutch 30 is provided with a flywheel 31, a clutch disc 32, a pressure plate 33, a diaphragm spring 34, and a clutch cover 35. The flywheel 31 and the clutch cover 35 are attached to the crankshaft 15, which is the input shaft for the clutch 30, so that these components can all rotate together. The clutch disc 32 is spline-connected to the input shaft 21 (output shaft for the clutch 30) of the manual transmission 2. The clutch disc 32 therefore can slide on the input shaft 21 (left/right direction shown in Figure 3) while rotating integrally with the input shaft 21. The pressure plate 33 is disposed between the clutch disc 32 and the clutch cover 35 and biased toward the flywheel 31 by an outer circumferential portion of the diaphragm spring 34.

The clutch actuator mechanism 300 includes, for example, a release bearing 301, a release fork 302, a clutch release cylinder 303, and a clutch master cylinder 304. The release bearing 301 is attached to the input shaft 21 so that it can slide on the input shaft 21. The release fork 302 is pivotally supported near the release bearing 301 by a spindle 302a and has an end thereof (lower end in Figure 3) in contact with the release bearing 301. The release fork 302 is coupled at the other end thereof (upper end in Figure 3) to an end (right end in Figure 3) of a rod 303a of the clutch release cylinder 303.

The clutch release cylinder 303 incorporates a piston 303c and other components in a cylinder body 303b. The piston 303c is coupled to the other end (left end in Figure 3) of the rod 303a. The clutch release cylinder 303 is connected to the clutch master cylinder 304 via hydraulic pressure piping 305.

Similarly to the clutch release cylinder 303, the clutch master cylinder 304 incorporates a piston 304c and other components in a cylinder body 304b. The piston 304c is coupled to an end (left end in Figure 3) of a rod 304a. The rod 304a is connected at the other end (right end in Figure 3) thereof to the middle portion of a pedal lever 711 of the clutch pedal 7. On top of the cylinder body 304b is there provided a reserve tank 304d supplying clutch fluid (working fluid; e.g., oil) into the cylinder body 304b.

The clutch master cylinder 304 is constructed so that the piston 304c, when acted upon by a manipulation force from the clutch pedal 7 being depressed by the driver, moves in the cylinder body 304b, generating a hydraulic pressure. The hydraulic pressure generated by the clutch master cylinder 304 is transmitted by the oil in the hydraulic pressure piping 305 to the clutch release cylinder 303.

In the clutch 3, the release fork 302 is actuated in response to a hydraulic pressure inside the clutch release cylinder 303, causing the clutch 30 to engage/disengage. Specifically, as the clutch pedal 7 is depressed deeper in the state shown in Figure 3 (clutch engaged mode), more oil is supplied from the clutch master cylinder 304 to the clutch release cylinder 303, adding to the hydraulic pressure inside the clutch release cylinder 303. Accordingly, the piston 303c and the rod 303a are moved to the right in Figure 3, the release fork 302 is rotated around the spindle 302a (clockwise in Figure 3), and the release bearing 301 is pushed toward the flywheel 31. This motion of the release bearing 301 elastically deforms the diaphragm spring 34 (pushes the center of the diaphragm spring 34 toward the flywheel 31). That reduces the biasing force being applied by the diaphragm spring 34 onto the pressure plate 33. Thus, the clutch becomes half-engaged where the pressure plate 33, the clutch disc 32, and the flywheel 31 engage while slipping.

In this half-engaged state of the clutch, if the release bearing 301 moves further toward the flywheel 31, and the biasing force being applied by the diaphragm spring 34 onto the pressure plate 33 is hence further reduced, the pressure plate 33, the clutch disc 32, and the flywheel 31 are separated, releasing (disengaging) the clutch 30 (clutch disengaged mode). The transmission of torque from the engine 1 to the manual transmission 2 is interrupted in clutch disengaged mode.

On the other hand, if the clutch pedal 7 is less depressed in clutch disengaged mode, oil is supplied back from the clutch release cylinder 303 to the clutch master cylinder 304, lowering the hydraulic pressure inside the clutch release cylinder 303. Accordingly, the piston 303c and the rod 303a are moved to the left in Figure 3, the release fork 302 is rotated around the spindle 302a (counterclockwise in Figure 3), and the release bearing 301 is moved away from the flywheel 31. This motion increases the biasing force being applied by the outer circumferential portion of the diaphragm spring 34 onto the pressure plate 33. Thus, friction force increases both between the pressure plate 33 and the clutch disc 32 and between the clutch disc 32 and the flywheel 31. These increased friction forces connect (engage) the clutch 30 (clutch engaged mode). The pressure plate 33, the clutch disc 32, and the flywheel 31 rotate integrally in clutch engaged mode. The crankshaft 15 and the input shaft 21 then rotate integrally so that torque is transmitted between the engine 1 and the manual transmission 2.

A pedal upper switch 72 and a pedal lower switch 73 are disposed near the pedal lever 711 of the clutch pedal 7. The pedal upper switch 72 and the pedal lower switch 73 detect that the driver has depressed the clutch pedal 7 to a predetermined amount. Specifically, the pedal upper switch 72 enables an output of an ON signal when the clutch pedal 7 is released up to such a position that the clutch 30 engages. The pedal lower switch 73 enables an output of an ON signal when the clutch pedal 7 is depressed to such a position that the clutch 30 disengages.

### -- Manual Transmission 2 --

The manual transmission 2 shown in Figure 1 is, for example, known synchromesh manual transmission (e.g., six sets of forward gears and one set of reverse gears). The manual transmission 2 transmits the driving force (drive torque) from the engine 1 to the output shaft (drive shaft) 22 at a predetermined gear ratio, as illustrated in Figure 1, when the clutch 3 is in engaged mode where the input shaft 21 is connected to the crankshaft 15 of the engine 1 via the clutch 3.

The manual transmission 2 provides a set of gears in accordance with the shift lever position manually selected using the shift lever 501 of the shift device 5 shown in Figure 1. The shift lever position selected using the shift lever 501 is detected by the shift lever position sensor 502.

Figure 4 is a skeleton diagram illustrating, as an example, the manual transmission 2 installed in the vehicle shown in Figure 1. The manual transmission 2, as illustrated in Figure 4, includes, for example, the input shaft 21, the output shaft 22, six sets of forward gears 201 to 206, each with different reduction ratio, a set of reverse gears 207, a first-second shift synchromesh mechanism 24A, a third-fourth shift synchromesh mechanism 24B, a fifth-sixth shift synchromesh mechanism 24C, and a casing 26.

The input shaft 21 is coupled to the crankshaft 15 of the engine 1 via the clutch 3. The output shaft 22 is coupled to the drive shaft 41 (see Figure 1). The set of gears being selected in the transmission 2 can be determined from the ratio of rotational speeds (output shaft rotational speed No/input shaft rotational speed Ni) obtained from the output signals of the input shaft rotational speed sensor 218 and the output shaft rotational speed sensor 411 shown in Figure 1.

The sets of forward gears 201 to 206 are combinations of drive gears 211 to 216 externally provided on the input shaft 21 and driven gears 221 to 226 externally provided on the output shaft 22. The drive gears 211 to 216 mate respectively with the driven gears 221 to 226.

The drive gears 211 and 212 for first and second gears are attached to the input shaft 21 in such a manner as to rotate integrally with the input shaft 21. In contrast, the drive gears 213 to 216 for third to sixth gears are attached to the input shaft 21 via bearings (e.g., cage and roller assemblies) so as to rotate relative to the input shaft 21. The driven gears 221 and 222 for first and second gears are attached to the output shaft 22 via bearings (e.g., cage and roller assemblies) so as to rotate relative to the output shaft 22. In contrast, the driven gears 223 to 226 for third to sixth gears are attached to the output shaft 22 in such a manner as to rotate integrally with the output shaft 22. The set of reverse gears 207 includes, for example, a reverse drive gear 217, a reverse driven gear 227, and a reverse idler gear 237.

The casing 26 houses the input shaft 21, the output shaft 22, the sets of forward gears 201 to 206, the set of reverse gears 207, and the shift synchromesh mechanisms 24A, 24B, and 24C, and stores hydraulic oil 27 in a lower portion of the casing 26.

The hydraulic oil 27 lubricates the input shaft 21, the output shaft 22, the sets of forward gears 201 to 206, the set of reverse gears 207, and the shift synchromesh mechanisms 24A, 24B, and 24C of the manual transmission 2. The surface 271 of the hydraulic oil 27 in the present embodiment is positioned so that the lower end portions of the driven gears 221 to 226 externally provided on the output shaft 22 are immersed, but a sleeve 241 of the shift synchromesh mechanism 24A is not immersed.

The hydraulic oil 27 is scooped up by the driven gears 221 to 226 and the reverse driven gear 227 on the output shaft 22, thereby lubricating, for example, the bearings (not shown), the sets of forward gears 201 to 206, the set of reverse gears 207, and the shift synchromesh mechanisms 24A, 24B, and 24C on the input shaft 21 and the output shaft 22 of the manual transmission 2.

Note that if the engine 1 is stopped under control of the ECU 8 (control implementation section 86 in this embodiment, which will be described later in detail in reference to Figure 7) while the vehicle is moving, the output shaft 22 of the manual transmission 2 continues to rotate, whereas the input shaft 21 stops rotating. Since the input shaft 21 stops rotating, the driven gears 221 and 222 and the reverse driven gear 227 on the output shaft 22, not rotating, do not scoop up the lubrication oil. Therefore, under this situation, the lubrication of the bearings (not shown), the sets of forward gears 201 to 206, the set of reverse gears 207, the shift synchromesh mechanisms 24A, 24B, and 24C, etc. on the input shaft 21 and the output shaft 22 of the manual transmission 2 will deteriorate. If this condition continues, lubrication could become insufficient.

The three synchromesh mechanisms 24A, 24B, and 24C have a practically identical, known structure, which will therefore be briefly described in reference to Figure 5. Figure 5 is a cross-sectional view of an exemplary upper half portion of the synchromesh mechanism 24A shown in Figure 4. Figure 5 illustrates the first-second shift synchromesh mechanism 24A, which is representative of the three synchromesh mechanisms 24A, 24B, and 24C. The following will describe the first-second shift synchromesh mechanism 24A in reference to Figure 5.

The first-second shift synchromesh mechanism 24A includes, for example, the sleeve 241, two synchronizer rings 242 and 243, a shifting key 244, and a clutch hub 245.

The clutch hub 245 mates with the output shaft 22 of the transmission 2 via a spline (not shown) and rotate integrally with the output shaft 22. The sleeve 241 mates with the outer circumference of the clutch hub 245 via an inner circumferential spline (not shown) and moves in a shift direction (x- or y-direction).

The first synchronizer ring 242 is pressed, for example, in the x-direction by the sleeve 241, so that the cone surface of the first synchronizer ring 242 comes in contact with the cone surface of the driven gear 221 of the first set of forward gears 201 which is idling on the output shaft 22 at a rotational speed in synchronism with the input shaft 21.

The second synchronizer ring 243 is pressed, for example, in the y-direction by the sleeve 241, so that the cone surface of the second synchronizer ring 243 comes in contact with the cone surface of the driven gear 222 of the second set of forward gears 202 which is idling on the output shaft 22 at a rotational speed in synchronism with the input shaft 21.

The synchronizer rings 242 and 243 each have on the outer circumference thereof an outer circumferential spline that mates with the inner circumferential spline of the sleeve 241. The shifting key 244 mates with the inner circumferential spline of the sleeve 241 and presses an end face of the first synchronizer ring 242, for example, early in an x-direction travel.

The operation of the first-second shift synchromesh mechanism 24A is known. When the sleeve 241 positioned as shown in Figure 5, the transmission 2 is in neutral. As the sleeve 241 is moved in the x-direction shown in Figure 5, the inner circumferential spline of the sleeve 241 mates with the driven gear 221 of the first set of forward gears 201 through synchronization of rotation by the first synchronizer ring 242, so that power can be transmitted from the input shaft 21 to the output shaft 22 via the first set of forward gears 201. If, under this situation, the sleeve 241 is moved in the y-direction shown in Figure 5, and the inner circumferential spline of the sleeve 241 separates from the driven gear 221 of the first set of forward gears 201 and goes back to the position shown in Figure 5, the first set of forward gears 201 returns to neutral where the first set of forward gears 201 is idling.

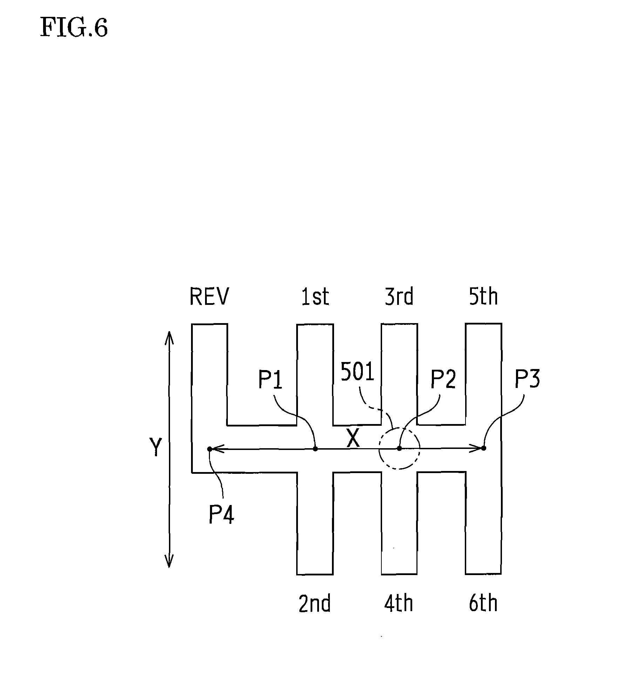

Next will be described a shift pattern (shift gate layout) of the shift gate disposed on the floor in the passenger compartment to guide the movement of the shift lever 501 of the shift device 5. Figure 6 is a plan view of an exemplary shift pattern (shift gate layout) for a shift gate guiding the movement of the shift lever 501 of the shift device 5 shown in Figure 1. Figure 6 schematically illustrates the shift pattern for the manual transmission 2 provided with six sets of forward gears and one set of reverse gears. In this embodiment, the shift lever 501 is adapted to enable manual selection in the direction shown in Figure 6 and manual shifting in the direction, indicated by arrow Y, which is perpendicular to the direction of manual selection.

A first-second select position P1, a third-fourth select position P2, a fifth-sixth select position P3, and a reverse select position P4 are aligned along the direction of manual selection indicated by arrow X. The shift lever 501 moves toward a first gear position 1st or a second gear position 2nd if the shift lever 501, when located at the first-second select position P1, is manually shifted (in the y-direction). If the shift lever 501 is manually moved toward the first gear position 1st, the sleeve 241 of the first-second shift synchromesh mechanism 24A of the manual transmission 2 is actuated to move to the right in Figure 4 where first gear is established. On the other hand, if the shift lever 501 is manually moved toward the second gear position 2nd, the sleeve 241 of the first-second shift synchromesh mechanism 24A is actuated to move to the left in Figure 4 where second gear is established.

Likewise, the shift lever 501 moves toward a third gear position 3rd or a fourth gear position 4th if the shift lever 501, when located at the third-fourth select position P2, is manually shifted. If the shift lever 501 is manually moved toward the third gear position 3rd, the sleeve 241 of the third-fourth shift synchromesh mechanism 24B of the manual transmission 2 is actuated to move to the right in Figure 4 where third gear is established. On the other hand, if the shift lever 501 is manually moved toward the fourth gear position 4th, the sleeve 241 of the third-fourth shift synchromesh mechanism 24B is actuated to move to the left in Figure 4 where fourth gear is established.

The shift lever 501 moves toward a fifth gear position 5th or a sixth gear position 6th if the shift lever 501, when located at the fifth-sixth select position P3, is manually shifted. If the shift lever 501 is manually moved toward the fifth gear position 5th, the sleeve 241 of the fifth-sixth shift synchromesh mechanism 24C of the manual transmission 2 is actuated to move to right in Figure 4 where fifth gear is established. On the other hand, if the shift lever 501 is manually moved toward the sixth gear position 6th, the sleeve 241 of the fifth-sixth shift synchromesh mechanism 24C is actuated to move to the left in Figure 4 where sixth gear is established.

The shift lever 501 moves toward a reverse position REV if the shift lever 501, when located at the reverse select position P4, is manually shifted. If the shift lever 501 is manually moved toward the reverse position REV, the synchromesh mechanisms 24A, 24B, and 24C of the manual transmission 2 switch to neutral (neutral mode), and at the same time the reverse idler gear 237 of the manual transmission 2 is actuated, establishing reverse gear.

The third-fourth select position P2 is the neutral position in this embodiment. If the shift lever 501 is manually moved to the neutral position P2, the synchromesh mechanisms 24A, 24B, and 24C of the manual transmission 2 switch to neutral (neutral mode) where the manual transmission 2 does not transmit torque between the input shaft 21 and the output shaft 22.

### -- Architecture of Engine Control Device 100 (ECU 8) --

Next will be described the architecture of the ECU 8 in reference to Figure 7. Figure 7 is a function/architecture diagram illustrating, as an example, the engine control device 100 (ECU 8) installed in the vehicle shown in Figure 1. The ECU 8 includes, for example, a central processing unit (CPU), a read-only memory (ROM), a random access memory (RAM), and a backup RAM.

The ROM stores, for example, various control programs. The CPU reads out the various control programs stored in the ROM to implement various processes. The RAM temporarily stores, for example, results of computation by the CPU. The backup RAM is a non-volatile memory which stores, for example, data which needs to be stored when the engine 1 is stopped.

The ECU 8 is communicably connected, for example, to the engine rotational speed sensor 124, the input shaft rotational speed sensor 218, the output shaft rotational speed sensor 411, the axle rotational speed sensor 431, the neutral sensor 251, the shift stroke sensor 252, the select stroke sensor 253, the shift lever position sensor 502, the accelerator position sensor 61, and the clutch stroke sensor 71 (see Figure 1).

The ECU 8 is communicably connected, for example, to the injector 102, the igniter 104 for the spark plug 103, and the throttle motor 106 for the throttle valve 105 as members the ECU 8 should control. The ECU 8 implements various control processes on the engine 1, including fuel injection control for the injector 102, ignition timing control for the spark plug 103, and drive control for the throttle motor 106, based on the outputs of the various sensors.

Next will be described the functions/architecture of the ECU 8 in accordance with the present invention in reference to Figure 7. The ECU 8 serves as a manipulation evaluation section 81, a vehicle speed detection section 82, a time memory section 83, a time setting section 84, a condition evaluation section 85, a control implementation section 86, and an alert section 87 by reading out and executing control programs stored in the ROM. The manipulation evaluation section 81, the vehicle speed detection section 82, the time memory section 83, the time setting section 84, the condition evaluation section 85, the control implementation section 86, and the alert section 87 are an equivalent of a part of the engine control device 100 in accordance with the present invention.

The manipulation evaluation section 81 provides a function of evaluating whether or not the driver has performed a predetermined manual stop instruction through which the driver instructs the engine 1 to stop while the vehicle is moving. Specifically, the manual stop instruction involves, for example, the following three manual processes (a first manual process, a second manual process, and a third manual process) performed sequentially in a predetermined period.

First manual process: the clutch 3 is switched to disengaged mode (turned off)
Second manual process: gears are shifted to neutral (N) in the manual transmission 2
Third manual process: the clutch 3 is switched to engaged mode (turned on)

For this series of manual processes to be evaluated as being a manual stop instruction, for example, the period from the completion of the first manual process to the commencement of the second manual process must be less than or equal to a predetermined first period (e.g., 5 seconds), and also the period from the completion of the second manual process to the commencement of the third manual process must be less than or equal to a predetermined second period (e.g., 5 seconds). A proper evaluation as to whether or not a manual stop instruction has been made is possible if the first and second periods are set to proper values.

Since a manual stop instruction involves a manual process of shifting gears to neutral (N) in the manual transmission 2 (the second manual process in this embodiment) as discussed above, the engine 1 is stopped with gears being in neutral (N). Hence, the engine 1 is stopped without adversely affecting the traveling state of the vehicle.

In addition, since the manual stop instruction involves a series of sequentially performed manual processes of switching the clutch 3 to disengaged mode (the first manual process in this embodiment), shifting gears to neutral (N) in the manual transmission 2 (the second manual process in this embodiment), and switching the clutch 3 to engaged mode (the third manual process in this embodiment), the engine 1 is stopped with gears being in neutral (N) and the clutch 3 being engaged. Hence, the engine 1 is stopped in a preferable state without adversely affecting the traveling state of the vehicle.

In other words, since the engine 1 is stopped with the clutch 3 being engaged, the driver may keep the foot off the clutch pedal 7 to maintain this condition (to keep the engine 1 stopped). That reduces drive operation workload on the driver.

The present embodiment has discussed a manual stop instruction that involves the aforementioned three manual processes (first, second, and third manual processes) sequentially performed in a predetermined period. Alternatively, the manual stop instruction may involve at least a manual process of shifting gears to neutral (N) in the manual transmission 2 (the second manual process in this embodiment). For example, if the clutch 3 is an "automatic clutch," the manual stop instruction is preferably manually shifting of gears to neutral (N) in the manual transmission 2 (the second manual process in this embodiment).

The vehicle speed detection section 82 provides a function of detecting vehicle speed V at predetermined sampling intervals ΔT (e.g., 0.05 seconds). Specifically, the vehicle speed detection section 82 detects vehicle speed V by multiplying the axle rotational speed Nv detected by the axle rotational speed sensor 431 by the perimeter of the drive wheel 44.

The time memory section 83 provides a function of storing a restart time TR in association with vehicle speed V The restart time TR is a period starting at time T10 when the engine 1 is stopped by the control implementation section 86 in response to an evaluation by the manipulation evaluation section 81 that a manual stop instruction has been made and ending at time T11 when the engine 1 is restarted to prevent insufficient lubrication in the manual transmission 2. The time memory section 83 is an equivalent of a part of the time setting means recited in the appended set of patent claims. The time memory section 83 stores the vehicle speed V and the restart time TR as a table (or map), for example, in the ROM of the ECU 8. The restart time TR stored by the time memory section 83 is read out by the time setting section 84.

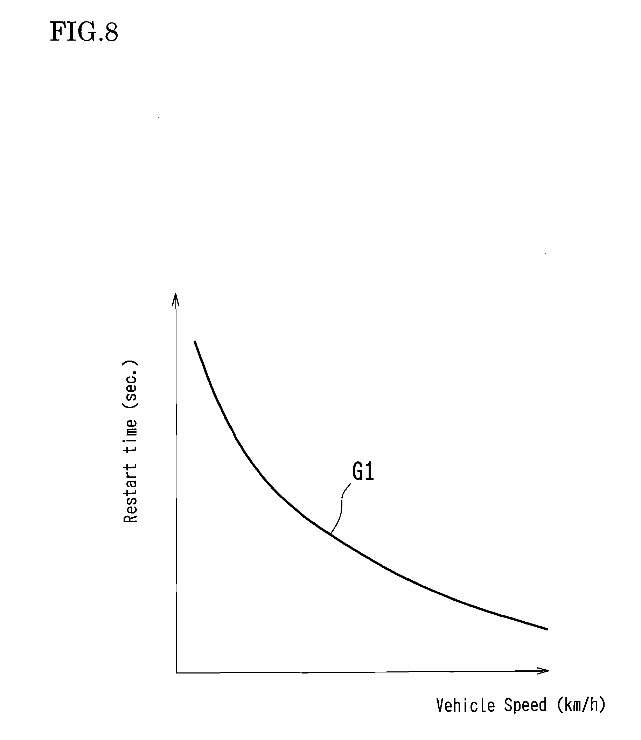

Figure 8 is a graph representing, as an example, stored content in the time memory section 83 shown in Figure 7. Figure 8 shows the vehicle speed V on the horizontal axis and the restart time TR on the vertical axis. The vehicle speed V and the restart time TR, stored in the time memory section 83, are predetermined so that the restart time TR decreases with an increase in the vehicle speed V as indicated by line G1. As will be described later in detail, the restart time TR is specified by the time setting section 84 reading out from the time memory section 83 the restart time TR associated with the vehicle speed V detected by the vehicle speed detection section 82.

Referring again to Figure 7, the functions/architecture of the ECU 8 will be described. The time setting section 84 provides a function of specifying the restart time TR based on the vehicle speed V detected by the vehicle speed detection section 82. The time setting section 84 is an equivalent of a part of the time setting means recited in the appended set of patent claims. Specifically, every time the vehicle speed detection section 82 detects vehicle speed V, the time setting section 84 specifies the restart time TR by reading out from the time memory section 83 the restart time TR associated with the detected vehicle speed V

The restart time TR is set to a shorter time in response to an increase in the vehicle speed V detected by the vehicle speed detection section 82 as discussed above. Hence, the restart time TR is set to a proper value. In other words, with an increase in the vehicle speed V, the output shaft rotational speed No, or the rotational speed of the output shaft 22, increases and thus increasingly deviates from the input shaft rotational speed Ni. Therefore, at greater vehicle speeds V, lubrication will increasingly likely become insufficient in the manual transmission 2. Hence, the restart time TR is set to a proper value by setting the restart time TR to a shorter time in response to an increase in the vehicle speed V

The present embodiment has discussed the time setting section 84 setting the restart time TR to a value associated with a detected vehicle speed V every time the vehicle speed detection section 82 detects vehicle speed V Alternatively, the time setting section 84 may set the restart time TR based on vehicle speed V For example, the time setting section 84 may set the restart time TR based on the vehicle speed V at time T10 when the engine 1 is stopped by the control implementation section 86 in response to an evaluation by the manipulation evaluation section 81 that a manual stop instruction has been made. The last arrangement simplifies processing.

In addition, since the restart time TR is specified by reading out the restart time TR associated with a detected vehicle speed V from the time memory section 83, the restart time TR is set to a proper value by a simple arrangement.

The present embodiment has discussed the time setting section 84 setting the restart time TR by reading out a restart time TR associated with a vehicle speed V from the time memory section 83. Alternatively, the time setting section 84 may set the restart time TR in any other manner. For example, the time setting section 84 may use a predetermined mathematical expression (e.g., a polynomial related to vehicle speed V) to calculate a restart time TR associated with vehicle speed V This arrangement renders the time memory section 83 redundant.

The condition evaluation section 85 provides a function of evaluating whether or not a restart condition is satisfied. The restart condition is a predetermined condition for the engine 1 to be restarted to prevent insufficient lubrication in the manual transmission 2 after the engine 1 is stopped while the vehicle is moving. The condition evaluation section 85 is an equivalent of the condition evaluation means recited in the appended set of patent claims. Specifically, the condition evaluation section 85 evaluates whether or not the restart time TR specified by the time setting section 84 has elapsed since time T10 when the engine 1 is stopped while the vehicle is moving. In other words, in the present embodiment, the restart condition is that the restart time TR specified by the time setting section 84 has elapsed since time T10 when the engine 1 is stopped while the vehicle is moving.

Since the restart condition is that a time longer than or equal to the restart time TR has elapsed since time T10 when the engine 1 is stopped as discussed above, an easy and proper evaluation as to whether or not the restart condition is satisfied is possible if the restart time TR is set to a proper value.

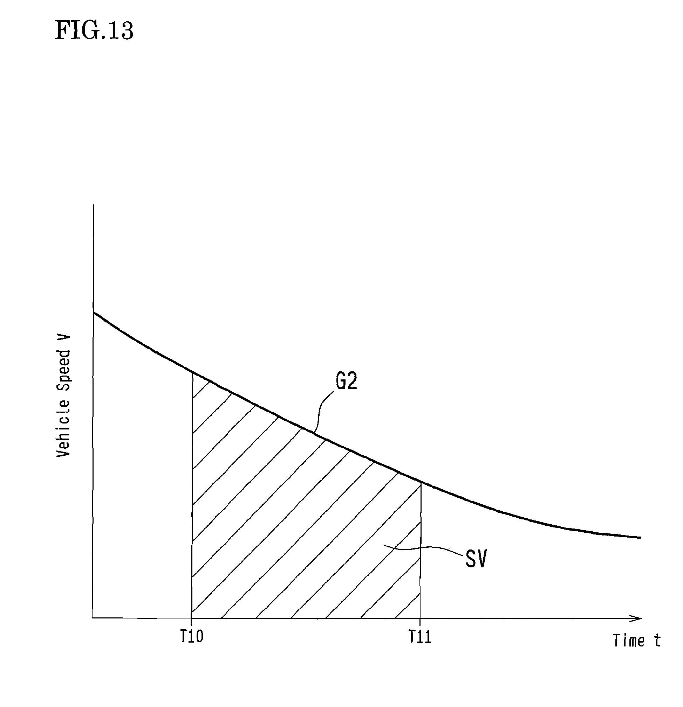

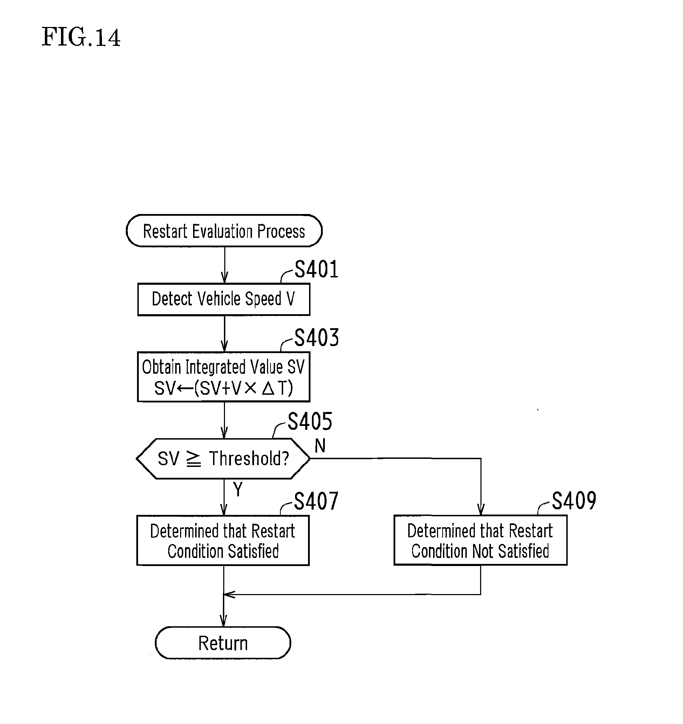

The present embodiment has discussed the restart condition being that a time longer than or equal to the restart time TR has elapsed since time T10 when the engine 1 is stopped. Alternatively, the restart condition may be any other condition(s). For example, as will be described later in detail in reference to Figures 13 and 14, the restart condition may be that a predetermined threshold SVth is less than or equal to an integrated value SV obtained by integrating the product of the vehicle speed V and the sampling interval ΔT starting from time T10 when the engine 1 is stopped.

The control implementation section 86 provides a function of implementing a stop operation on the engine 1 if the manipulation evaluation section 81 determines that a manual stop instruction has been made while the vehicle is moving. The control implementation section 86 is an equivalent of the control implementation means recited in the appended set of patent claims. Specifically, the stop operation is implemented on the engine 1, for example, by stopping fuel injection from the injector 102. The stop operation is implemented on the engine 1 preferably by stopping ignition of the spark plug 103 via the igniter 104 as well as by stopping fuel injection from the injector 102.

The control implementation section 86 provides a function of implementing a restart operation on the engine 1 if the condition evaluation section 85 determines that the restart condition is satisfied. Even if the condition evaluation section 85 determines that the restart condition is not satisfied, the control implementation section 86 implements the restart operation on the engine 1 when the driver has made a manual restart instruction through which the driver instructs the engine 1 to restart. The manual restart instruction is, for example, manual switching of the clutch 3 to disengaged mode (turns off the clutch 3).

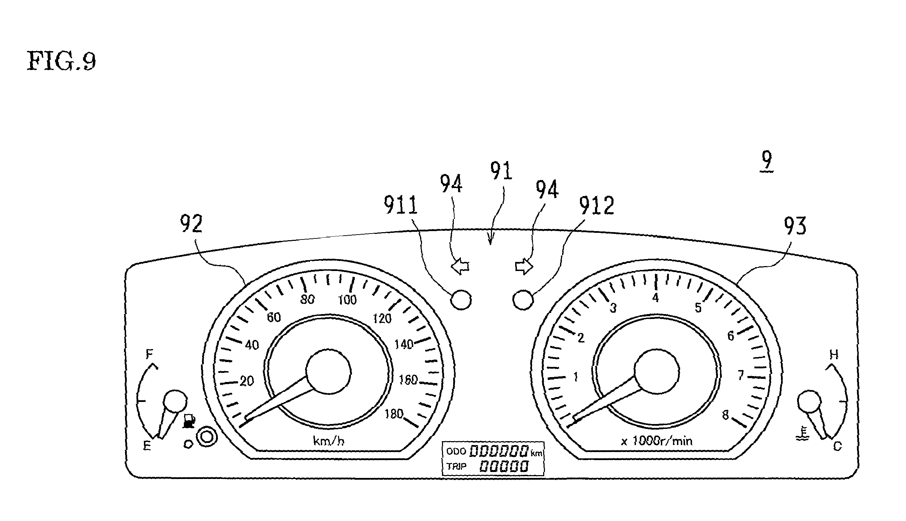

The alert section 87 provides a function of outputting an alert that the engine 1 has been stopped if the control implementation section 86 has implemented a stop operation on the engine 1. The alert section 87 is an equivalent of a part of the alert means recited in the appended set of patent claims. Specifically, if the control implementation section 86 has implemented a stop operation on the engine 1, the alert section 87 produces such a display by using an engine off indicator 912 shown in Figure 9 that the driver can visually recognize that the engine 1 has been stopped.

The alert section 87 provides another function of outputting an alert that the engine 1 has been restarted if the control implementation section 86 has implemented a restart operation on the engine 1. Specifically, if the control implementation section 86 has implemented a restart operation on the engine 1, the alert section 87 produces such a display by using the engine off indicator 912 shown in Figure 9 that the driver can visually recognize that the engine 1 has been restarted.

Now referring to Figure 9, it will be described how an engine off display section 91 (combination of an engine off permission indicator 911 and the engine off indicator 912) operates. Figure 9 is a front view of an example of the display section (combination meter) 9 shown in Figure 7. The combination meter 9 is located at such a location in the front of the vehicle that it is visually recognizable to the driver. As illustrated in Figure 9, the combination meter 9 includes, for example, the engine off display section 91, a speedometer 92, a tachometer 93, direction indicators 94, and various warning indicators.

The engine off display section 91 is disposed between the speedometer 92 and the tachometer 93 and includes the engine off permission indicator 911 and the engine off indicator 912. The engine off display section 91 is an equivalent of a part of the alert means recited in the appended set of patent claims.

The engine off permission indicator 911 produces, based on instructions from the ECU 8 (in this embodiment, the alert section 87 shown in Figure 7), such a display for the driver that the driver can visually recognize whether or not a manual stop instruction has been made while the vehicle is moving. Specifically, the engine off permission indicator 911 is, for example, a substantially circular lamp built around a green light emitting diode (LED). The engine off permission indicator 911 is turned on by the ECU 8 (in this embodiment, the alert section 87 shown in Figure 7) if a manual stop instruction is performed while the vehicle is moving and kept turned off by the ECU 8 (in this embodiment, the alert section 87 shown in Figure 7) if no manual stop instruction is performed while the vehicle is moving.

The engine off indicator 912 produces, based on instructions from the ECU 8 (in this embodiment, the alert section 87 shown in Figure 7), such a display for the driver that the driver can visually recognize whether or not the control implementation section 86 has implemented a restart operation on the engine 1. Specifically, the engine off indicator 912 is, for example, a substantially circular lamp built around a red LED. The engine off indicator 912 is turned on by the ECU 8 (in this embodiment, the alert section 87 shown in Figure 7) if the ECU 8 (in this embodiment, the control implementation section 86 shown in Figure 7) has stopped the engine 1 while the vehicle is moving and turned off after flashing for a period (e.g., 2 seconds) predetermined by the ECU 8 (in this embodiment, the alert section 87 shown in Figure 7) if the ECU 8 (in this embodiment, the control implementation section 86 shown in Figure 7) has been restarted the engine 1 while the vehicle is moving.

As discussed above, if a restart operation is implemented on the engine 1, the alert section 87 produces such a display on the engine off indicator 912 that the driver can visually recognize that the engine 1 has been restarted. Therefore, for example, the driver can, while driving, recognize that the engine 1 has been restarted. That improves convenience.

The present embodiment has discussed the alert section 87 turning off the engine off indicator 912 after causing it to flash for 2 seconds if a restart operation is implemented on the engine 1. Alternatively, the alert section 87 may alert the driver in any other manner that the engine 1 has been restarted. For example, if a restart operation is implemented on the engine 1, the alert section 87 may output an audio alert (e.g., a predetermined sound or voice alerting the driver that the engine has been restarted) indicating that a restart operation has been implemented on the engine 1 or may produce such a display of an image or letters indicating that a restart operation has been implemented on the engine 1.

As discussed above, if a stop operation has been implemented on the engine 1, the alert section 87 produces such a display on the engine off indicator 912 that the driver can visually recognize that the engine 1 has been stopped. Therefore, for example, the driver can, while driving, recognize that the engine 1 has been stopped. That further improves convenience.

The present embodiment has discussed the alert section 87 turning on the engine off indicator 912 if a stop operation has been implemented on the engine 1. Alternatively, the alert section 87 may alert the driver in any other manner that the engine 1 has been stopped. For example, if a stop operation is implemented on the engine 1, the alert section 87 may output an audio alert (e.g., a predetermined sound or voice alerting the driver that the engine has been stopped) indicating that the engine 1 has been stopped or may produce such a display of an image or letters indicating that the engine 1 has been stopped.

### -- Operation of Engine Control Device 100 (ECU 8) --

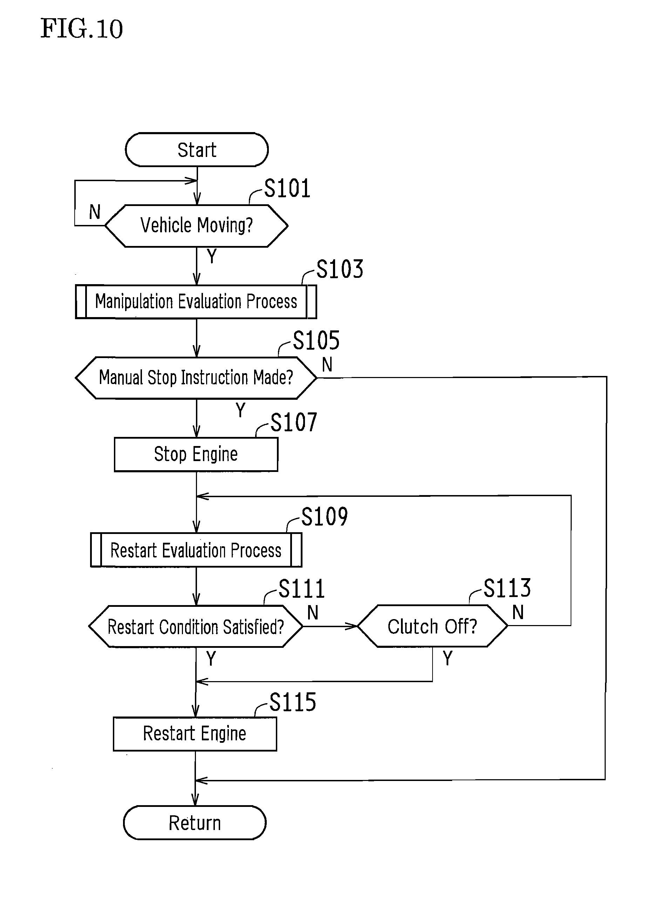

Next will be described the operation of the engine control device 100 (primarily, the ECU 8) in accordance with the present invention in reference to Figure 10. Figure 10 is a flow chart depicting, as an example, an operation of the engine control device 100 (primarily, the ECU 8) shown in Figure 7. First, in step S101, the manipulation evaluation section 81 evaluates whether or not the vehicle is moving by using the axle rotational speed sensor 431. If YES in step S101, the operation proceeds to step S103; if NO in step S101, the operation goes into standby mode.

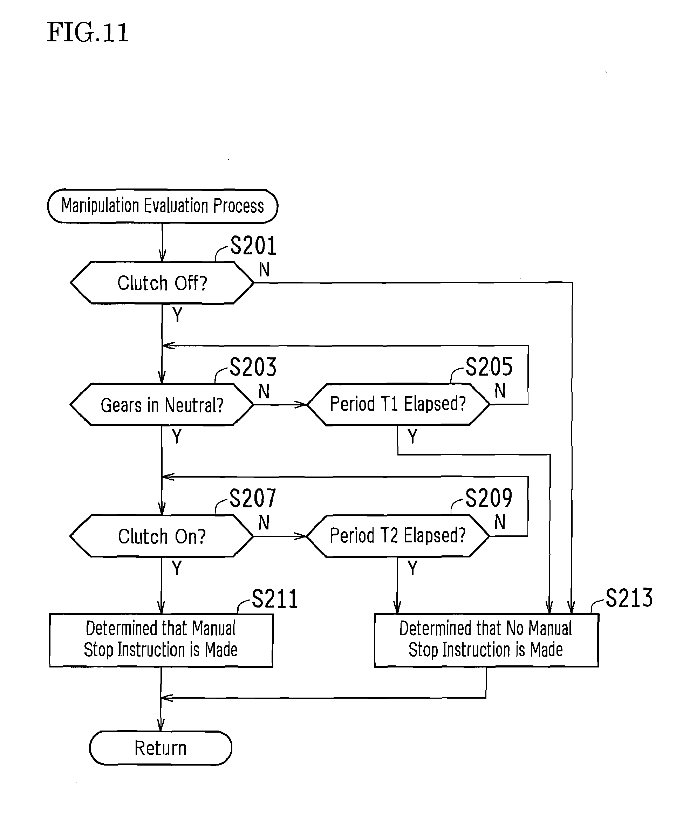

In step S103, the manipulation evaluation section 81 implements a manipulation evaluation process of evaluating whether or not a manual stop instruction has been made while the vehicle is moving. The manipulation evaluation process will be described later in detail in reference to Figure 11.

Next, in step S105, the control implementation section 86 determines from a result in step S105 whether or not a manual stop instruction has been made. If YES in step S105, the operation proceeds to step S107; if NO in step S105, the operation returns to step S101, and step S101 and subsequent steps are repeated. In step S107, the control implementation section 86 implements a stop operation on the engine 1, and the alert section 87 turns on the engine off indicator 912.

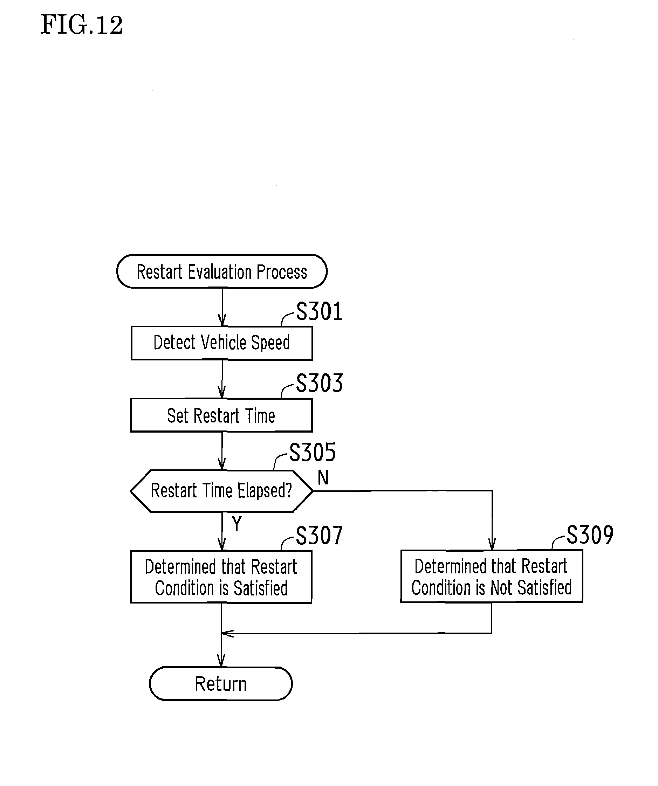

Next, in step S109, the condition evaluation section 85 implements a restart evaluation process of evaluating whether or not the restart condition is satisfied. The restart evaluation process will be described later in detail in reference to Figure 12. Next, in step S111, the control implementation section 86 determines from a result in step S109 whether or not the restart condition is satisfied. If YES in step S111, the operation proceeds to step S115; if NO in step S111, the operation proceeds to step S113.

In step S113, the control implementation section 86 determines whether or not a manual restart instruction has been made (in this embodiment, whether or not the clutch 3 has been manually switched to disengaged mode (turned off)). If YES in step S113, the operation proceeds to step S115; if NO in step S113, the operation returns to step S109, and step S109 and subsequent steps are repeated.

In step S115, the control implementation section 86 implements a restart operation on engine 1, and the alert section 87 turns off the engine off indicator 912 after causing it to flash for 2 seconds. The operation then returns to step S101, and step S101 and subsequent steps are repeated.

The engine 1 is restarted if it is determined that the restart condition is satisfied as discussed above. Therefore, if the clutch 3 is in engaged mode (on), the input shaft 21 of the manual transmission 2 is driven to rotate. Since the rotation of the input shaft 21 drives idling gears (e.g., the driven gears 221 and 222 shown in Figure 4) on the output shaft 22 to rotate, the idling gears scoop up the lubrication oil. That prevents insufficient lubrication.

### -- Manipulation Evaluation Process --

Figure 11 is a flow chart depicting in detail an exemplary manipulation evaluation process implemented in step S103 in the flow chart in Figure 10. The following will describe an operation of the ECU 8 in the manipulation evaluation process in reference to Figure 11. All the steps described in the following are implemented by the manipulation evaluation section 81. First, in step S201, it is evaluated whether or not the clutch 3 has been manually switched to disengaged mode (turned off). If YES in step S201, the operation proceeds to step S203; if NO in step S201, the operation proceeds to step S213.

In step S203, it is evaluated whether or not the manual transmission 2 has been manually switched to neutral (N). If YES in step S203, the operation proceeds to step S207; if NO in step S203, the operation proceeds to step S205. In step S205, it is evaluated whether or not the predetermined period T1 (e.g., 5 seconds) has elapsed since it is determined in step S201 that the clutch 3 has been manually switched to disengaged mode (turned off). If YES in step S205, the operation proceeds to step S213; if NO in step S205, the operation returns to step S203, and step S203 and subsequent steps are repeated.

In step S207, it is evaluated whether or not the clutch 3 has been manually switched to engaged mode (turned on). If YES in step S207, the operation proceeds to step S211; if NO in step S207, the operation proceeds to step S209. In step S209, it is evaluated whether or not the predetermined period T2 (e.g., 5 seconds) has elapsed since it is determined in step S203 that the manual transmission 2 has been manually switched to neutral (N). If YES in step S209, the operation proceeds to step S213; if NO in step S209, the operation returns to step S207, and step S207 and subsequent steps are repeated.

In step S211, it is determined that a manual stop instruction has been made, and the operation returns to step S105 in the flow chart in Figure 10. It is determined in step S213 that no manual stop instruction has been made, and the operation returns to step S105 in the flow chart in Figure 10.

### -- Restart Evaluation Process --

Figure 12 is a flow chart depicting in detail an exemplary restart evaluation process implemented in step S109 in the flow chart in Figure 10. The following will describe an operation of the ECU 8 in the restart evaluation process in reference to Figure 12. First, in step S301, the vehicle speed detection section 82 detects vehicle speed V using the axle rotational speed sensor 431. Next, in step S303, the time setting section 84 reads out from the time memory section 83 a restart time TR associated with the vehicle speed V detected in step S301 to set the restart time TR to that value.

Next, in step S305, the condition evaluation section 85 evaluates whether or not the restart condition is satisfied. The restart condition is that the restart time TR specified in step S303 has elapsed since time T10 when the engine 1 is stopped in step S107 in the flow chart in Figure 10. If YES in step S305, the operation proceeds to step S307; if NO in step S305, the operation proceeds to step S309.

In step S307, the condition evaluation section 85 determines that the restart condition is satisfied, and the operation returns to step S111 in the flow chart in Figure 10. In step S309, the condition evaluation section 85 determines that the restart condition is not satisfied, the operation returns to step S111 in the flow chart in Figure 10.

### -- Variation Examples --

Figure 13 is a graph representing another exemplary restart evaluation process (variation example) implemented in step S109 in the flow chart in Figure 10. Figure 14 is a flow chart depicting in detail another exemplary restart evaluation process (variation example) implemented in step S109 in the flow chart in Figure 10. The following will describe other embodiments (variation examples) of the restart evaluation process in reference to Figures 13 and 14.

First, referring to Figure 13, specific actions for a variation example of the restart evaluation process will be described. Figure 13 shows time t on the horizontal axis and vehicle speed V on the vertical axis. Line G2 represents change in vehicle speed V Time T10 is a time when the engine 1 comes to a stop after the control implementation section 86 implements a stop operation on the engine 1 in response to the manipulation evaluation section 81 determining that a manual stop instruction has been made while the vehicle is moving.

In this embodiment (variation example), the restart condition is that a predetermined threshold SVth is less than or equal to an integrated value SV obtained by integrating the product (V x ΔT) of the vehicle speed V detected by the vehicle speed detection section 82 and the sampling interval ΔT (e.g., 0.05 seconds) starting from time T10 when the engine 1 is stopped. In other words, time T11 in Figure 13 is when the integrated value SV is evaluated to be greater than or equal to the predetermined threshold SVth, and the condition evaluation section 85 determines that the restart condition is satisfied. To put it differently, at time T11, the condition evaluation section 85 determines that the restart condition is satisfied, and a restart operation is implemented on the engine 1.

Next, referring to Figure 14, specific actions for a variation example of the restart evaluation process will be described. The detailed flow chart in Figure 14 represents a process implemented in place of the process represented in the detailed flow chart in Figure 12. This embodiment will discuss the ECU 8 including an integrated value calculation section 88 (not shown) which provides a function of obtaining the integrated value SV. The embodiment assumes for convenience that the integrated value SV has an initial value of 0.

First, in step S401, the vehicle speed detection section 82 detects vehicle speed V In step S403, the integrated value calculation section 88 multiplies the vehicle speed V detected in step S401 by the sampling interval ΔT to obtain a product thereof (V x ΔT) and adds the product to the current integrated value SV to update the integrated value SV Next, in step S405, the condition evaluation section 85 evaluates whether or not the integrated value SV obtained in step S403 is greater than or equal to the threshold SVth.

If YES in step S405, the operation proceeds to step S407; if NO in step S405, the operation proceeds to step S409. In step S407, the condition evaluation section 85 determines that the restart condition is satisfied, and the operation returns to step S111 in the flow chart in Figure 10. In step S409, the condition evaluation section 85 determines that the restart condition is not satisfied, and the operation returns to step S111 in the flow chart in Figure 10.

As discussed above, vehicle speed V is detected at predetermined sampling intervals ΔT and multiplied by a sampling interval ΔT to obtain a product (V x ΔT) thereof. The obtained product (V x ΔT) is integrated starting from time T10 when the engine 1 is stopped to obtain an integrated value SV. If the obtained integrated value SV is greater than or equal to a predetermined threshold SVth, it is determined that the restart condition is satisfied. Therefore, a more proper evaluation is possible as to whether or not the restart condition is satisfied.

In other words, when gears are in neutral (N), the rotational speed No of the output shaft 22 increases with an increase in the vehicle speed V, and so does the difference (No-Ni) in rotational speed between the output shaft 22 and the input shaft 21. Therefore, at greater vehicle speeds V, lubrication will increasingly likely become insufficient in the manual transmission 2. Lubrication will also increasingly likely become insufficient in the manual transmission 2 as time elapses since time T10 when the engine 1 is stopped. As discussed above, it is determined that the restart condition is satisfied if the integrated value SV obtained by integrating the product of vehicle speed V and a sampling interval ΔT for the vehicle speed V starting from time T10 when the engine 1 is stopped is greater than or equal to a predetermined threshold SVth. Hence, a more proper evaluation is possible as to whether or not the restart condition is satisfied.

This embodiment (variation example) has discussed the integrated value SV being updated every time vehicle speed V is detected (every 0.05 seconds in this embodiment). Alternatively, the integrated value SV may be updated at a lower frequency. For example, the integrated value SV may be updated once for every N detections of vehicle speed V (N is an integer equal to 2 or greater; for example, N = 10). This arrangement reduces workload on the ECU 8.

This embodiment (variation example) has discussed the integrated value SV being obtained by integrating a product of vehicle speed V and a sampling interval ΔT. Alternatively, the integrated value SV may be obtained by integrating a product (Vα x ΔT) of a power of vehicle speed V (vehicle speed V raised to the α-th power, or Vα, where α is a positive real number; for example, α = 1.5) and a sampling interval ΔT. In this arrangement, a more proper evaluation is possible as to whether or not the restart condition is satisfied if the exponent α is set to a proper value.

### -- Other Embodiments --

The embodiments and variation examples above have discussed the ECU 8 serving as the manipulation evaluation section 81, the vehicle speed detection section 82, the time memory section 83, the time setting section 84, the condition evaluation section 85, the control implementation section 86, and the alert section 87. Alternatively, at least any one of the manipulation evaluation section 81, the vehicle speed detection section 82, the time memory section 83, the time setting section 84, the condition evaluation section 85, the control implementation section 86, and the alert section 87 may be implemented in hardware in electronic circuit form.

The embodiments and variation examples above have discussed the shift lever position sensor 502 detecting the shift lever position selected using the shift lever 501. Alternatively, the shift lever position selected using the shift lever 501 may be inferred from the input shaft rotational speed Ni and the output shaft rotational speed No. This arrangement renders the shift lever position sensor 502 redundant.

The embodiments and variation examples above have discussed the clutch 3 operating in response to the amount of depression of the clutch pedal 7. Alternatively, the clutch 3 may be an "automatic clutch" (or an automatic manual transmission; AMT). In this arrangement, the manual stop instruction is preferably manual shifting of gears of the manual transmission 2 to neutral (N).

### Industrial Applicability

The present invention is applicable to an engine control device in a vehicle including an engine, a manual transmission, and a clutch disposed between the engine and the manual transmission and capable of switching between disengaged mode and engaged mode, the engine control device stopping the engine in response to a manual instruction to stop the engine while the vehicle is moving.

### Reference Signs List

- 1: Engine
- 100: Engine Control Device
- 102: Injector
- 104: Igniter
- 106: Throttle Motor
- 124: Engine Rotational Speed Sensor
- 2: Manual Transmission
- 21: Input Shaft
- 218: Input Shaft Rotational Speed Sensor
- 22: Output Shaft
- 24A, 24B, 24C, 24D: Shift Synchromesh Mechanism
- 251: Neutral Sensor
- 252: Shift Stroke Sensor
- 253: Select Stroke Sensor
- 26: Casing
- 27: Hydraulic Oil
- 271: Surface Of oil
- 3: Clutch
- 30: Friction Clutch
- 411: Output Shaft Rotational Speed Sensor
- 431: Axle Rotational Speed Sensor
- 5: Shift Device
- 502: Shift Lever Position Sensor
- 6: Accelerator Pedal
- 61: Accelerator Position Sensor
- 7: Clutch Pedal
- 71: Clutch Stroke Sensor
- 8: ECU (Part of Engine Control Device)
- 81: Manipulation Evaluation Section
- 82: Vehicle Speed Detection section
- 83: Time Memory Section (Part of Time Setting Means)
- 84: Time Setting Section (Part of Time Setting Means)
- 85: Condition Evaluation Section (Condition Evaluation Means)
- 86: Control Implementation Section (Control Implementation Means)
- 87: Alert Section (Part of Alert Means)
- 9: Combination Meter (Display Section: Part of Engine Control Device)
- 91: Engine Off Display Section (Part of Alert Means)
- 911: Engine Off Permission Indicator
- 912: Engine Off Indicator

## Claims

1. An engine control device in a vehicle including an engine, a manual transmission, and a clutch disposed between the engine and the manual transmission and capable of switching between disengaged mode and engaged mode, said engine control device stopping the engine in response to a manual instruction to stop the engine while the vehicle is moving,
said engine control device comprising:
condition evaluation means which, if the engine is stopped while the vehicle is moving, evaluates whether or not a predetermined restart condition is satisfied for the engine to be restarted in order to prevent insufficient lubrication in the manual transmission; and
control implementation means which, if the condition evaluation means determines that the restart condition is satisfied, implements a restart operation on the engine.

2. The engine control device as set forth in claim 1, wherein the restart condition is that a time longer than or equal to a predetermined restart time has elapsed since the engine is stopped.

3. The engine control device as set forth in claim 2, further comprising time setting means which sets the restart time based on vehicle speed.

4. The engine control device as set forth in claim 3, wherein the time setting means sets the restart time to a shorter time in response to an increase in the vehicle speed.

5. The engine control device as set forth in claim 1, further comprising:
vehicle speed detection means which detects a vehicle speed at predetermined sampling intervals; and
integrated value computation means which multiplies the vehicle speed detected by the vehicle speed detection means by the sampling interval to obtain a product thereof and integrates each product thus obtained starting from when the engine is stopped, so as to obtain an integrated value, wherein
the restart condition is that the integrated value obtained by the integrated value computation means is greater than or equal to a predetermined threshold.

6. The engine control device as set forth in any one of claims 1 to 5, further comprising alert means which, if the control implementation means has implemented the restart operation on the engine, outputs an alert that the engine has been restarted.

7. The engine control device as set forth in claim 6, wherein the alert means produces such a display that a driver can visually recognize that the engine has been restarted.

8. The engine control device as set forth in either one of claims 6 and 7, wherein if the engine is stopped in response to a manual instruction to stop the engine while the vehicle is moving, the alert means outputs an alert that the engine has been stopped.
